# FASCICULE DE BREVET EUROPEEN

(11) **EP 0 404 685 B1**
(45) Date de publication et mention de la délivrance du brevet: **10.11.1993**
(21) Numéro de dépôt: 90401766.2
(22) Date de dépôt: 21.06.1990
(51) Int. Cl.: C22B 7/00

(54) **Procédé et dispositif de séparation des constituants d'un alliage**
Verfahren und Anlage zur Trennung der Bestandteile einer Legierung
Process and apparatus for separating the constituents of an alloy

(30) Priorité: 22.06.1989 FR 8908345
(43) Date de publication de la demande: 27.12.1990
(73) Titulaire: JEUMONT INDUSTRIE - JI, F-92058 Puteaux (FR)
(72) Inventeur: Van den Broek D'Obrenan, Jean, F-78150 Le Chesnay (FR); Garnier, Marcel, F-38410 Uriage (FR)
(74) Mandataire: Le Brusque, Maurice

(56) Documents cités:
- EP-A- 0 187 194
- FR-A- 876 013
- FR-A- 1 439 859
- FR-A- 2 374 425
- FR-A- 2 609 655
- US-A- 3 767 381

## Description

L'invention est relative à un procédé de séparation des constituants d'un alliage, notamment applicable aux alliages comportant un métal de base réfractaire et au moins un métal d'apport non réfractaire.

Elle est également relative à un dispositif de séparation des constituants d'un alliage.

Dans l'ensemble de la description, on comprendra par "métal réfractaire" un métal dont la température de fusion est telle que la fusion ne peut être effectuée dans un creuset à garnissage classique et qu'elle est donc supérieure à 2000°C environ. Si l'on se réfère à la température d'ébullition à la pression normale, celle-ci est supérieure à 3500° C environ.

L'invention n'est donc pas limitée à ce type particulier d'alliage. Cependant, elle trouve principalement son intérêt pour celui-ci.

On connait différents procédés de séparation des constituants d'un alliage et notamment des procédés utilisant la technique industrielle de l'évaporation sous pression réduite de métaux en fusion.

Cette technique a été jusqu'ici appliquée à des métaux à basse température de fusion. On peut ainsi citer, comme exemple de l'emploi de l'évaporation des métaux dissous dans un métal de base afin de raffiner ce métal de base, la séparation du plomb et du zinc en colonne à distiller.

Dans le cas de la distillation, le chauffage du bain en fusion est obtenu par effet joule et notamment par flamme. La température maximale pouvant être obtenue est de l'ordre de 1800°C.

Ce procédé connu, applicable aux métaux à basse température de fusion, ne convient donc pas aux alliages comportant un métal réfractaire.

On peut également citer le document FR-A-876.013 qui divulgue un procédé de récupération en une seule opération des métaux constituant un alliage qui consiste à traiter l'alliage dans un four sous vide de façon à obtenir, par séparation directe, l'un des métaux constituant l'alliage sous forme liquide ou solide sur la sole du four, et, l'autre ou les autres métaux constituant l'alliage, sous forme liquide ou solide, par volatilisation à des températures appropriées et condensation dans des condenseurs. Le document cite notamment la récupération par distillation du zinc et du plomb.

Ce procédé est nécessairement limité en température du fait de l'utilisation d'un four électrique. On peut noter que la température maximale mentionnée dans ce document est de 1 200°C.

On comprend qu'un tel procédé ne peut pas convenir pour la distillation d'alliages comportant un métal de base réfractaire.

La technique de l'évaporation sous pression réduite de métaux en fusion a été aussi utilisée dans le cadre de la séparation isotopique, par photo-ionisation et précipitation sous champ électromagnétique, pour produire du combustible nucléaire. Ce procédé consiste à assurer la fusion de l'uranium dans un creuset par bombardement électronique puis à séparer les molécules U₂₃₅ et U₂₃₈ en appliquant un champ électromagnétique.

Cette séparation étant permise par la différence de masse moléculaire entre les molécules U₂₃₅ et U₂₃₈, elle pourrait aussi être appliquée à un alliage.

Ce procédé est cependant beaucoup trop complexe et coûteux pour que l'on puisse envisager, du point de vue industriel, de l'appliquer à des alliages.

On peut également noter que cette technique a été utilisée dans le cadre d'un procédé permettant le revêtement métallique de la surface de substrats, métalliques ou non, pour leur conférer des caractéristiques physiques et chimiques semblables à celles du métal d'apport, en bénéficiant de certains avantages dûs à la minceur du dépôt.

Ce procédé est connu sous le nom de PVD (Dépôts Physiques en phase vapeur). Le métal ou l'alliage d'apport est mis en fusion par un procédé électrique (inducteur, effet joule ou bombardement électronique) afin d'être prioritairement transféré sur le support sans modification de composition si possible, lorsqu'il s'agit d'alliages.

Son but est totalement différent de celui de l'invention, puisqu'il s'agit de transformer l'état de surface d'un support par sa métallisation, par exemple pour lutter contre la corrosion ou créer une surface réfléchissante, et non de séparer les constituants d'un alliage.

On peut noter que dans ces différents procédés, les modes de chauffage du bain en fusion sont : le bombardement électronique, l'induction ou l'effet joule, ce dernier étant réservé aux métaux à bas point de fusion.

Le but de l'invention est de proposer un procédé et un dispositif de séparation des constituants d'un alliage, utilisant la technique de l'évaporation sous pression réduite des métaux en fusion, applicables à des alliages présentant une température de fusion élevée et relativement simples et peu coûteux.

Le procédé et le dispositif selon l'invention necessitent le chauffage de l'alliage que l'on souhaite raffiner. Il existe différents procédés de fusion de métal.

Le document FR-A-2.374.425 divulgue un procédé pour la séparation d'alliages de métaux à haute température de fusion qui consiste à faire passer l'alliage pulvérisé à travers un faisceau de plasma et à récupérer les vapeurs de métal de manière contrôlée dans des chambres de refroidissement.

Ainsi, le chauffage des alliages est obtenu grâce aux faisceaux de plasma lequel constitue une matière étrangère au métal, cette matière véhiculant la chaleur et devant ensuite être extraite. Le calibre des appareils est nécessairement important, pour une quantité donnée d'alliage traité.

De plus, le procédé fait intervenir du plasma qui est en général actif chimiquement car composé d'argon et d'oxygène, ce qui entraîne des risques de contamination de l'alliage.

Le document FR-A-1.439.859 concerne un procédé et un dispositif de purification de métaux à point de fusion élevé. Le chauffage est principalement effectué au moyen d'un four à bombardement d'électrons. Il peut également être effectué par un four à induction, le métal à traiter étant placé dans un creuset de carbone. La purification s'effectue en ajoutant au métal à purifier un élément ou un composé relativement peu volatile et présentant, pour l'oxygène dissout dans le métal à purifier, une affinité telle qu'il puisse former avec lui un oxyde volatile stable qui s'élimine dans les conditions de température et de pression de traitement.

Ce procédé nécessite la présence d'éléments additionnels pour effectuer la purification. De plus, le carbone du creuset agit chimiquement sur les matériaux à traiter.

On peut également citer les techniques de fusion en creuset froid à transfert de chaleur par induction, sous éventuelle atmosphère contrôlée, qui sont maintenant assez connues et font l'objet de premières applications industrielles. Elles permettent la fusion des métaux les plus réfractaires en assurant un brassage efficace de la masse en fusion.

Pour ce qui concerne ces techniques de fusion, l'invention se réfère notamment aux techniques décrites par les brevets US-3,775,091, FR 2 497 050 et la demande de brevet FR-87 00814.

Dans une première catégorie d'appareils, illustrée notamment par le brevet FR 2 497 050, le métal fondu dans le creuset froid peut être évacué au fur et à mesure par une lingotière, située souvent sous le creuset. Ce dernier assure la fusion, la solidification se produisant dans le canal. L'attaque physico-chimique de la paroi du canal peut être évitée en provoquant la formation d'un laitier dont une pellicule solidifiée le long de la paroi en assure la protection. Elle peut aussi être évitée par confinement électromagnétique au moyen d'un champ magnétique alternatif auxiliaire qui assure un léger décollement de la mase fondue, le long de la paroi.

Dans une deuxième catégorie d'appareils, illustrée notamment par le brevet US-3,775,091 et la demande de brevet FR-87 00814, le métal à l'état solide peut être évacué au fur et à mesure, par tirage vers le bas.

Dans cette deuxième catégorie, on connait des dispositifs dont la forme du creuset et le dessin du solénoïde d'induction sont tels que sont assurés, simultanément :
- la fusion sous atmosphère contrôlée sans laitier,
- le décollement de la masse fondue sur pratiquement toute la paroi,
- le décollement de la masse solidifiée dans le canal de coulée, sans qu'il soit nécessaire d'assurer le confinement par un champ et un générateur de champ magnétique auxiliaire.

Ces dispositifs sont très intéressants pour les opérations de fusion et coulée continue de métaux et alliages caractérisés par :
- soit leur température élevée de fusion,
- soit leur agressivité chimique vis-à-vis des parois,
- soit le caractère polluant de leur vapeur.

Ces dispositifs ne nécessitent pas l'emploi de laitier, lequel a l'inconvénient d'être volatil, voire polluant.

Ils trouvent leur application particulièrement pour la récupération des déchets de métaux nobles tels le titane, et sont testés pour la réduction du volume des gaines de combustible nucléaire (Zircalloy) par fusion et sans modification de leur composition chimique et donc de leur radioactivité.

Ces dispositifs et leurs prédécesseurs dont ils sont dérivés, ont tous un point commun, ils sont conçus et utilisés :
- soit pour la fusion ou la refusion de métaux ou oxydes métalliques réfractaires sans modification de leur composition chimique (sauf un éventuel dégagement d'une fraction de l'oxygène et de l'azote atmosphériques dissous ou adsorbés),
- soit pour l'élaboration de métaux par réduction directe d'oxydes ou calciothermie d'halogénures métalliques.

Les dispositifs que l'on vient d'évoquer permettent donc la fusion d'un alliage présentant une température de fusion élevée, en évitant toute action chimique, qu'elle soit due à l'emploi d'un laitier ou à l'attaque des parois du creuset.

C'est pourquoi, ils sont de préférence utilisés pour réaliser le chauffage de l'alliage dans le cadre du procédé selon l'invention. De même, le dispositif selon l'invention incorpore de préférence leurs éléments constitutifs.

L'invention est donc relative à un procédé de séparation des constituants d'un alliage, notamment un alliage comportant un métal de base réfractaire et au moins un métal d'apport non réfractaire, comprenant les étapes suivantes :
- assurer le chauffage dudit alliage par des moyens de fusion par induction, en évitant toute action chimique sur ledit alliage, et à au moins une température et sous atmosphère contrôlée permettant l'ébullition d'au moins un métal d'apport,
- recueillir les vapeurs de distillation d'au moins un métal d'apport, et
- recueillir, à la sortie d'un dispositif de coulée, la matière résultant de l'élimination de l'alliage d'au moins un métal d'apport.

De préférence, le dispositif de coulée est un dispositif de coulée continue.

Dans la mesure où les vapeurs de distillation sont recueillies sur une structure refroidie, le procédé consiste ensuite à détacher de cette structure le(s)dit(s) métal(métaux) d'apport condensé(s).

Selon une première variante du procédé selon l'invention,, lorsque ledit alliage comporte au moins deux métaux d'apport, la température de chauffage dudit alliage est choisie de façon à permettre l'ébullition simultanée de tous les métaux d'apport, les vapeurs de distillation de tous les métaux d'apport étant alors recueillies simultanément.

Selon un mode préféré de cette première variante, on sépare les métaux d'apport les uns des autres après les avoir détachés de la structure refroidie sur laquelle ils se sont simultanément condensés.

Selon une deuxième variante du procédé selon l'invention, lorsque ledit alliage comporte au moins deux métaux d'apport, le chauffage dudit alliage, éventuellement appauvri d'au moins un métal d'apport, est assuré successivement sous atmosphère contrôlée et à des températures différentes, permettant l'ébullition sélective de chaque métal d'apport.

Selon un mode préféré de cette deuxième variante, le chauffage est effectué de façon à obtenir l'ébullition des métaux d'apport dans un ordre croissant des températures d'ébullition correspondantes.

De plus, de préférence, on détache chaque métal d'apport condensé de ladite structure après le chauffage correspondant à sa température d'ébullition et avant de procéder au chauffage de l'alliage, appauvri d'au moins un métal d'apport, à une température permettant l'ébullition d'un autre métal d'apport.

De façon préférée, on porte ladite structure refroidie à un potential électrique continu négatif par rapport au bain métallique en fusion.

L'invention est aussi relative à un dispositif de séparation des constituants d'un alliage comportant un métal de base réfractaire et au moins un métal d'apport non réfractaire comprenant :
- des moyens d'alimentation en alliage,
- des moyens de fusion assurant la fusion par induction dudit alliage tout en évitant toute action chimique sur celui-ci,
- un dispositif de coulée pour recueillir le lingot froid,
- des moyens pour recueillir les vapeurs de distillation d'au moins un métal d'apport, et
- au moins une chambre à atmosphère contrôlée, isolant de l'atmosphère au moins le contenu desdits moyens assurant la fusion dudit alliage.

De façon préférée, le dispositif de coulée est un dispositif de coulée continue.

De préférence, lesdits moyens assurant la fusion dudit alliage comprennent un creuset contenant le bain métallique en fusion et un inducteur.

De préférence, ledit creuset est refroidi par des moyens appropriés.

Selon un mode préféré, lesdits moyens pour recueillir les vapeurs de distillation d'au moins un métal d'apport sont constitués par une structure refroidie par des moyens appropriés.

Cette structure refroidie peut prendre la forme d'une plaque, d'un serpentin ou d'un cylindre creux.

Selon un autre mode préféré, ladite chambre est reliée à une pompe à vide par l'intermédiaire de moyens de raccordement.

De préférence, ladite chambre est refroidie par des moyens appropriés.

Selon un exemple de réalisation, la chambre est à double paroi, parcourue par un fluide de refroidissement.

De façon préférée, le dispositif selon l'invention comprend une chambre annexe mise en communication avec ladite chambre par un conduit.

De préférence, ladite chambre annexe est refroidie par des moyens appropriés.

Selon un exemple de réalisation, ladite chambre annexe est à double paroi, parcourue par un fluide de refroidissement.

On peut noter que, de préférence, la température du fluide de refroidissement associé à la chambre ou à la chambre annexe est supérieure à celle d'un fluide assurant le refroidissement de ladite structure refroidie.

Selon un premier mode de réalisation du dispositif selon l'invention, ladite structure refroidie est placée dans ladite chambre.

Selon un deuxième mode de réalisation du dispositif selon l'invention, ladite structure refroidie est placée dans ladite chambre annexe.

De façon préférée, le dispositif selon l'invention comprend des moyens pour porter ladite structure refroidie à un potentiel électrique continu négatif par rapport au bain métallique en fusion.

De préférence, ces moyens sont constitués par un générateur de courant continu, la structure refroidie étant isolée des parois de la chambre ou de la chambre annexe et du creuset par une pièce.

L'invention sera mieux comprise et d'autres buts, avantages et caractéristiques de celle-ci apparaitront plus clairement à la lecture de la description qui suit. A cette description, sont annexées des figures qui représentent de façon non limitative des modes particuliers de réalisation du dispositif selon l'invention sur lesquelles :
- la figure 1 représente une vue schématique en coupe d'une première variante d'un premier mode de réalisation de l'invention,
- la figure 2 représente une vue schématique en coupe d'une deuxième variante d'un premier mode de réalisation de l'invention,
- la figure 3 représente une vue schématique en coupe d'une première variante d'un second mode de réalisation de l'invention et
- la figure 4 représente une vue schématique en coupe d'une deuxième variante d'un second mode de réalisation de l'invention.

Les éléments communs aux différentes figures seront désignés par les mêmes références.

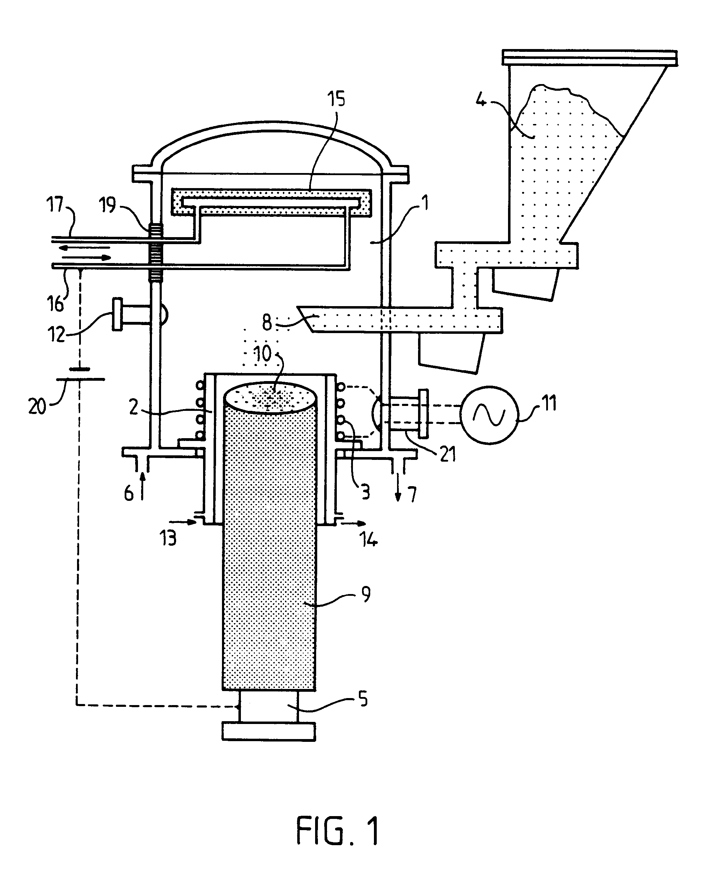

En référence à la figure 1, le dispositif selon l'invention comprend une chambre 1, appelée chambre du four, à atmosphère contrôlée, qui permet d'isoler de l'atmosphère au moins le contenu du creuset 2.

Les parois doubles de la chambre 1 sont refroidies par un dispositif de refroidissement, dont seuls les conduits d'entrée 6 et de sortie 7 d'un fluide de refroidissement circulant dans les parois doubles sont représentés sur la figure. La chambre 1 est reliée à une pompe à vide, non représentée sur la figure, par l'intermédiaire de moyens de raccordement 12.

Le creuset 2, également à double paroi, est refroidi par un autre dispositif approprié, dont seuls les conduits d'entrée 13 et de sortie 14 du fluide de refroidissement du creuset sont représentés.

Il est entouré, sur une partie de sa hauteur, par un inducteur 3 à spires hélicoïdales qui est alimenté par un convertisseur de fréquence 11, connecté à l'inducteur par des moyens 21 connus.

Le dispositif comprend de plus une trémie 4 contenant les produits à traiter, à laquelle est raccordé un système d'alimentation. Celui-ci se termine par un conduit d'alimentation 8, dont une extrémité est placée dans la chambre 1, au-dessus de la partie supérieure du creuset 2, les produits à traiter pouvant ainsi y être facilement introduits.

Dans l'exemple représenté, la trémie 4 est située à l'extérieur de la chambre 1. Ceci nécessite qu'un raccordement étanche soit prévu entre le conduit 8 et la paroi correspondante de la chambre 1. La trémie peut tout aussi bien être placée à l'intérieur de la chambre. Cette deuxième disposition est plus simple du point de vue de la fabrication du dispositif puisque le raccordement étanche n'est alors plus nécessaire.

La référence 10 désigne la masse de métal en fusion et la référence 9 le lingot de métal refondu.

Le dispositif comporte un système 5 pour l'extraction continue du lingot froid.

Le creuset 2, l'inducteur 3 et le système 5 d'extraction, qui constituent un dispositif de fusion et coulée continue de métaux, sont tels qu'ils permettent la fusion d'un alliage, dont la température de fusion est élevée, en évitant toute action chimique, qu'elle soit due à l'emploi d'un laitier ou à l'attaque des parois du creuset.

Le dispositif comprend enfin une plaque 15, qui peut notamment présenter la forme d'un disque. Elle est ici placée dans la partie supérieure de la chambre 1.

La plaque 15 est munie de canaux internes à circulation de fluide et refroidie par un dispositif approprié, dont seuls les conduits d'entrée 16 et de sortie 17 du fluide de refroidissement sont représentés.

La plaque 15 peut éventuellement être isolée électriquement de l'enveloppe de la chambre 1 et du creuset 2 par une pièce 19 qui assure la continuité mécanique et l'étanchéité de la chambre.

Un générateur 20 de courant continu, qui peut être régulé électroniquement, est alors connecté entre la plaque 15 et le creuset 2 de façon à ce que la plaque 15 soit portée à un potentiel électrique continu négatif par rapport au bain métallique en fusion. L'intérêt et le fonctionnement de cette disposition particulière seront décrits dans la suite de la description.

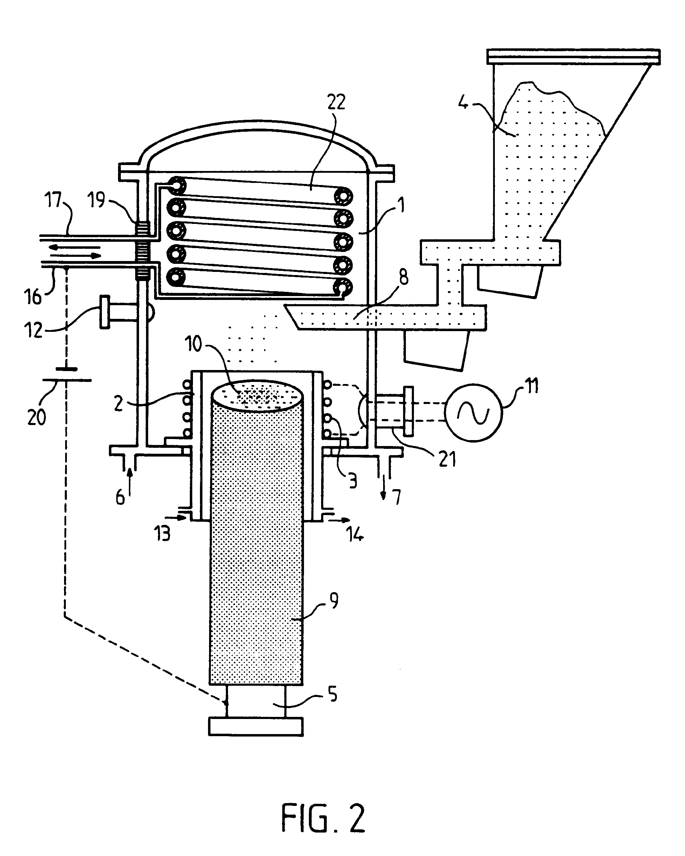

Le dispositif selon l'invention tel que représenté à la figure 2 ne diffère de celui qui vient d'être décrit que par le remplacement de la plaque 15 par un serpentin 22, refroidi comme précédemment par un dispositif approprié.

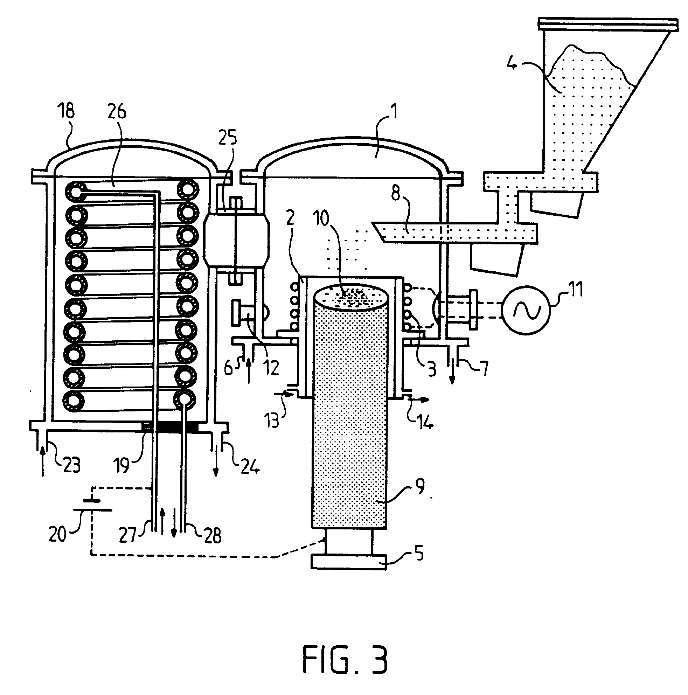

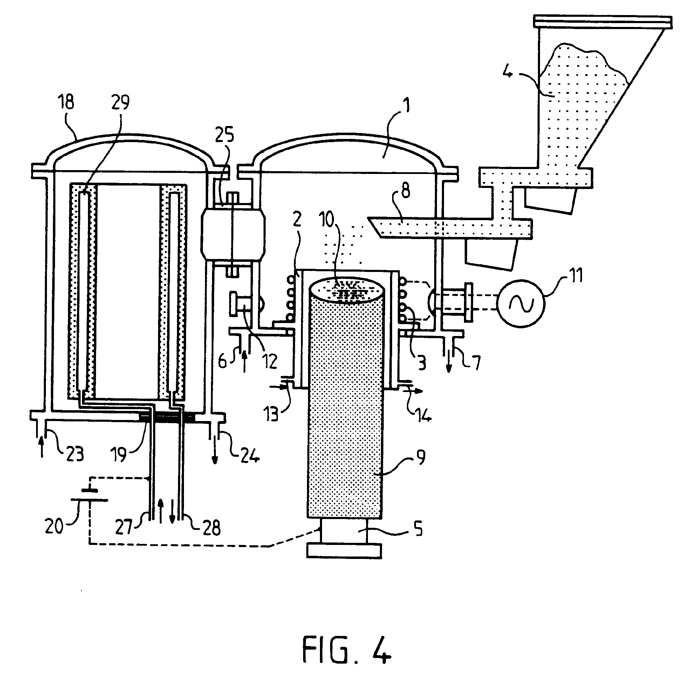

Les dispositifs selon l'invention tels que représentés sur les figures 3 et 4 diffèrent de ceux décrits en référence aux figures 1 et 2 du fait que la structure refroidie n'est plus située à l'intérieur de la chambre 1 mais dans une chambre annexe 18.

Cette chambre annexe est ici principalement constituée par un corps cylindrique, également à double paroi, et qui est refroidi par un dispositif approprié. Seuls les conduits d'entrée 23 et de sortie 24 du fluide de refroidissement sont représentés sur les figures 3 et 4.

Un conduit 25 est prévu pour mettre en communication les chambres 1 et 18. La chambre 18 est donc elle aussi à atmosphère contrôlée.

En référence à la figure 3, un serpentin 26 est placé dans la chambre annexe 18 et refroidi par un dispositif approprié dont seuls les conduits d'entrée 27 et de sortie 28 du fluide de refroidissement sont représentés.

Dans le dispositif représenté à la figure 4, le serpentin 26 est remplacé par un cylindre creux 29, à double paroi, dont les parois internes et externes sont elles aussi refroidies par un système approprié.

On peut noter, que dans les différents dispositifs qui viennent d'être décrits, les parois de la chambre 1 et de la chambre 18, si elle est prévue, sont parcourues par un fluide de refroidissement dont la température est supérieure à celle du fluide de refroidissement associé à la structure refroidie (plaque 15, serpentins 22 ou 26 ou encore cylindre 29).

A titre indicatif, il suffit que la température du fluide de refroidissement des parois de la chambre 1 soit inférieure à 90°C tandis que la température du fluide de refroidissement associé à la structure refroidie est par exemple de l'ordre de 7°C.

Le procédé selon l'invention va maintenant être décrit relativement au dispositif selon la figure 1. Il est aisément transposable aux autres dispositifs, décrits relativement aux figures 2 à 4. De plus, il est clair que le procédé selon l'invention n'est pas limité à son application aux exemples de réalisation des dispositifs selon l'invention qui ont été décrits.

Par l'intermédiaire de la trémie 4 et du conduit d'alimentation 8, le creuset 2 est alimenté en alliage.

Comme indiqué précédemment, le dispositif de fusion et coulée continue de métaux qui est choisi, et qui comporte le creuset 2, l'inducteur 3 et le système 5 pour l'extraction du lingot froid vers le bas, permet d'assurer la fusion d'un alliage dont la température de fusion est élevée tout en évitant toute action chimique.

Ce dispositif fonctionne de façon continue. En fonctionnement établi, l'alimentation du creuset et l'extraction du lingot froid sont régulés de façon précise, le creuset contenant ainsi une quantité de métal relativement constante.

Par un réglage approprié de l'inducteur 3, de la pression et de la composition chimique de l'atmosphère à l'intérieur de la chambre 1, on procède à la distillation de l'alliage.

Le réglage peut être effectué de façon à permettre l'ébullition simultanée de tous les métaux d'apport contenus dans l'alliage. Les vapeurs métalliques se condensent alors sur la plaque 15.

Dans le cas des autres dispositifs décrits, celles-ci se condensent sur le serpentin 22 ou 26 ou encore sur les parois internes et externes du cylindre 29.

On peut noter qu'au cours de la distillation, le système 5 permet d'extraire du creuset un lingot froid composé uniquement du métal de base de l'alliage, les métaux d'apport ayant été éliminés du fait de la distillation.

Lorsque la distillation est terminée, c'est-à-dire lorsque toute la quantité d'alliage que l'on souhaite raffiner est passée dans le creuset 2, on détache les vapeurs condensées de la structure refroidie 15.

On peut alors procéder à la séparation des différents métaux d'apport par tous les moyens connus de l'homme de l'art, dans la mesure où l'alliage comprend au moins deux métaux d'apport.

Le réglage peut aussi être effectué, dans la mesure où l'alliage comprend au moins deux métaux d'apport, de façon à obtenir directement une distillation fractionnée des métaux d'apport et non, comme précédemment, une distillation globale suivie d'une étape de séparation des métaux d'apport. Dans ce cas, le réglage est assuré de façon à chauffer l'alliage tout d'abord à une première température et sous atmosphère contrôlée permettant l'ébullition d'un premier métal d'apport.

Lorsque toute la quantité d'alliage à distiller est passée dans le creuset 2, on détache de la structure refroidie les vapeurs condensées du premier métal d'apport.

Le lingot froid extrait du creuset 2 est constitué par l'alliage initial appauvri du premier métal d'apport.

On alimente alors le creuset 2 en alliage appauvri du premier métal d'apport, et on règle l'inducteur 3, la pression et la composition de l'atmosphère à l'intérieur de la chambre 1 de façon à obtenir l'ébullition d'un deuxième métal d'apport.

Comme dans l'étape précédente, lorsque tout l'alliage appauvri est passé dans le creuset, on détache de la structure refroidie les vapeurs condensées du deuxième métal d'apport.

Le lingot froid extrait du creuset 2 est constitué par l'alliage initial appauvri des premier et deuxième métaux d'apport.

On procède ainsi par étapes successives jusqu'à ce que tous les métaux d'apport aient été extraits de l'alliage initial, le lingot froid extrait du creuset 2 étant alors constitué uniquement par le métal de base de l'alliage.

On comprend qu'il est préférable d'effectuer le chauffage de l'alliage, éventuellement appauvri, de façon à obtenir l'ébullition des métaux d'apport dans un ordre croissant des températures d'ébullition correspondantes.

Ceci assure en effet qu'un seul métal d'apport est extrait de l'alliage, éventuellement appauvri, à chaque étape de chauffage.

On peut noter qu'il ne sera pas toujours possible de procéder directement à une distillation fractionnée d'un alliage, notamment lorsque les écarts entre les températures d'ébullition des différents métaux d'apport seront insuffisants.

Dans les procédés qui viennent d'être décrits, on peut remarquer que, de préférence, la pression de l'atmosphère sera réglée pour éviter une perte sensible du métal de base par évaporation et sa composition chimique choisie pour empêcher la formation d'oxydes, nitrures, hydrures, etc ...

A titre d'exemple d'application du procédé selon l'invention, on peut citer le Zircalloy, dont les constituants ont les points d'ébullition suivants, à pression atmosphérique :
- zirconium : 4337°C
- fer : 2750°C
- chrome : 2672°C
- nickel : 2732°C
- étain : 2270°C

A titre d'exemple, une installation selon la figure 1 peut avoir une chambre 1 d'environ 500 mm de hauteur et 500 mm de diamètre interne; un creuset 2 d'environ 250 mm de hauteur, 130 mm de diamètre externe et 100 mm de diamètre interne, un conduit d'alimentation 8 d'environ 50 mm de diamètre, et une trémie d'environ 500 mm de hauteur avec une section de sortie à sa base d'environ 200 mm de large et une section d'entrée, à son extrémité supérieure d'environ 400 mm de large.

En ce qui concerne un flux typique de matières, en creuset de 100 mm de diamètre interne, en refusion de matières divisées, la vitesse d'extraction du lingot 9 peut atteindre 3 mètres par heure, avec une puissance de l'ordre de 100 kW du système 5 d'extraction.

Dans le cas où la structure refroidie est placée à l'intérieur de la chambre 1, comme par exemple la plaque 15 de la figure 1 ou le serpentin 22 de la figure 2, elle est démontée avant que le ou les métaux d'apport en soient détachés. Le détachement s'effectue donc en dehors de la chambre 1.

Lorsque la structure refroidie est placée à l'intérieur de la chambre annexe 18, comme par exemple le serpentin 26 ou le cylindre 29, la chambre annexe est facilement détachée de la chambre 1 et on peut alors la remplacer par une autre chambre annexe et procéder immédiatement à une nouvelle étape de chauffage.

La structure refroidie, après son démontage, peut être débarrassée des dépôts de condensation, qui se présentent sous forme de "croûtes", par un procédé mécanique (chocs ou vibrations) ou thermique (choc thermique), connu de l'homme de l'art.

Le processus de collecte et de traitement des métaux d'apport ne sera pas décrit plus en détail ici.

La structure refroidie utilisée présente une forme appropriée lui permettant d'épouser le profil intérieur de la chambre 1 ou de la chambre annexe 18 et rendant possible les démontages et le passage des canalisations du fluide de refroidissement.

Les moyens de démontage des structures refroidies n'ont pas été représentés sur les figures, ils sont à la portée de l'homme de l'art.

On peut noter que des structures en faisceau de tubes peuvent être utilisées en lieu et place des serpentins si l'on a avantage à réduire l'échauffement du fluide de refroidissement (et donc l'inégalité de température le long de la structure refroidie) aux dépens de son débit.

On a vu que la ou les chambres, à double paroi, sont parcourues par un fluide de refroidissement d'une température plus élevée que le fluide circulant dans les structures refroidies.

La forme et les dimensions de la ou des chambres sont adaptées en tant que de besoin pour permettre la bonne circulation des fluides et le démontage facile des éléments d'usure et aussi pour prendre en compte les effets thermiques du rayonnement de la masse en fusion.

Nous avons vu précédemment qu'il est possible de porter la structure refroidie 15, 22, 26, 29 à un potentiel électrique continu négatif par rapport au bain métallique en fusion 10.

Ceci peut être assuré en connectant la borne négative du générateur 20 au conduit d'entrée, électriquement conducteur, 16 ou 27, du circuit de refroidissement respectivement de la plaque 15 (fig. 1), du serpentin 22 (fig. 2) ou 26 (fig. 3) ou du cylindre creux 29 (fig. 4), qui sont tous électriquement conducteurs, alors que la borne positive du générateur 20 est connectée au système d'extraction.

Cette polarisation, suivant un effet connu, appelé communément "dépôt ionique", provoque une ionisation avec passage d'un courant régulé au besoin, accélère et favorise le dépôt et la condensation des vapeurs métalliques sur des substrats métalliques. Ceci suppose toutefois que la pression absolue soit réduite au dessous de environ 1 Pascal, l'atmosphère étant inerte, par exemple constituée par de l'Argon. Ceci est parfaitement compatible avec les dispositions mécaniques décrites ci-dessus.

Une propriété connue des dépôts ioniques est leur grande adhérence au substrat qui les reçoit. Dans le cas présent, cela peut être un désavantage ; c'est pourquoi il est proposé de ne provoquer le dépôt ionique par application de la tension continue, que lorsqu'une première couche, peu adhérente, s'est déjà formée.

Ainsi, cette disposition particulière avec un générateur 20 de courant continu permet d'accélérer le transfert des métaux vers la structure refroidie et de combattre les risques de dépôts parasites sur les autres parties de l'installation.

L'invention est notamment applicable à :
- toutes les opérations d'affinage des métaux réfractaires de haute valeur ajoutée,
- la récupération de métaux d'apport dans des déchets d'alliage, et à
- la réduction ou l'élimination de la radioactivité de déchets métalliques, lorsque ce sont les métaux d'apport (à forte "section efficace de capture") et non le métal de base (à faible "section efficace de capture") qui sont à l'origine de la radioactivité.

Cette troisième application est la base d'une nouvelle formule de retraitement des gaines de combustible, en Zircalloy, irradiées dans les centrales nucléaires à eau pressurisée.

Elle a pour objectif d'éviter le coûteux stockage sous-terrain de longue durée d'une majeure partie de la masse de ces déchets.

Le Zircalloy contient une forte proportion de Zirconium (96 à 97 %) et les métaux d'apport sont le fer, l'étain, le chrome, et parfois le nickel. Leur section efficace de capture pour les neutrons thermiques est de 4 à 40 fois plus élevée que celle du Zirconium pur. Le calcul montre que le Zirconium débarrassé de ces métaux d'apport ne sera plus que faiblement radioactif.

Le lingot 9 issu de la coulée continue sera de faible activité et pourra être utilisé après un stockage de sécurité de faible durée.

Les métaux d'apport solidifiés sur la structure refroidie prévue seront de haute activité et manipulés et stockés comme tels. Cependant, la masse de ceux-ci ne devrait pas dépasser 4 à 5 % de la masse totale à traiter.

Il est à noter que le procédé selon l'invention utilise positivement ce qui est un inconvénient dans la refusion de métaux volatils ou d'alliages les contenant. Ainsi, dans la refusion pour mise en forme de chrome à partir de chrome électrolytique divisé, il se produit une évaporation intense de chrome, dont les vapeurs se condensent sur les parois de l'enceinte refroidie. Il en est de même pour l'aluminium dans l'élaboration d'alliages à base de niobium en creuset froid.

Les signes de référence insérés après les caractéristiques techniques énoncées dans les revendications, ont pour seul but de faciliter la compréhension de ces dernières et ne peuvent avoir en aucun cas pour effet de limiter l'intervention aux modes particuliers de réalisation qui viennent d'être décrits.

## Revendications

1. Procédé de séparation des constituants d'un alliage convenant pour un alliage comportant un métal de base réfractaire et au moins un métal d'apport non réfractaire comprenant les étapes suivantes :
- assurer le chauffage dudit alliage grâce à des moyens de fusion par induction, en évitant toute action chimique sur ledit alliage, et à au moins une température et sous atmosphère contrôlée permettant l'ébullition d'au moins un métal d'apport,
- recueillir les vapeurs de distillation d'au moins un métal d'apport et
- recueillir à la sortie d'un dispositif de coulée la matière résultant de l'élimination de l'alliage d'au moins un métal d'apport.

2. Procédé selon la revendication 1, caractérisé en ce que le dispositif de coulée est un dispositif de coulée continue.

3. Procédé selon l'une des revendications 1 ou 2, caractérisé en ce que les vapeurs de distillation étant recueillies sur une structure refroidie, l'on détache le(s)dit(s) métal(métaux) d'apport condensé(s) de ladite structure.

4. Procédé selon l'une des revendication 1 à 3, caractérisé en ce que ledit alliage comportant au moins deux métaux d'apport, la température de chauffage dudit alliage est choisie de façon à permettre l'ébullition simultanée de tous les métaux d'apport, les vapeurs de distillation de tous les métaux d'apport étant alors recueillies simultanément.

5. Procédé selon la revendication 4, caractérisé en ce que l'on sépare lesdits deux métaux d'apport après les avoir détachés de ladite structure.

6. Procédé selon l'une des revendications 1 à 3, caractérisé en ce que ledit alliage comportant au moins deux métaux d'apport, le chauffage dudit alliage, éventuellement appauvri d'au moins un métal d'apport, est assuré successivement sous atmosphère contrôlée et à des températures différentes, permettant l'ébullition sélective de chaque métal d'apport.

7. Procédé selon la revendication 6, caractérisé en ce que le chauffage est effectué de façon à obtenir l'ébullition des métaux d'apport dans un ordre croissant des températures d'ébullition correspondantes.

8. Procédé selon la revendication 6 ou 7, caractérisé en ce que l'on détache chaque métal d'apport condensé de ladite structure après le chauffage correspondant à sa température d'ébullition et avant de procéder au chauffage de l'alliage, appauvri d'au moins un métal d'apport, à une température permettant l'ébullition d'un autre métal d'apport.

9. Procédé selon l'une des revendications précédentes, caractérisé en ce que l'on porte ladite structure refroidie à un potentiel électrique continu négatif par rapport au bain métallique en fusion.

10. Dispositif de séparation des constituants d'un alliage, notamment un alliage comportant un métal de base réfractaire et au moins un métal d'apport non réfractaire comprenant :
- des moyens (4) d'alimentation en alliage,
- des moyens de fusion (2, 3) assurant la fusion par induction dudit alliage tout en évitant toute action chimique sur celui-ci,
- un dispositif de coulée, pour recueillir le lingot froid (9)
- des moyens (15, 22, 26, 29) pour recueillir les vapeurs de distillation d'au moins un métal d'apport et
- au moins une chambre (1) à atmosphère contrôlée, isolant de l'atmosphère au moins le contenu desdits moyens (2, 3) assurant la fusion dudit alliage.

11. Dispositif selon la revendication 10, caractérisé en ce que le dispositif de coulée est un dispositif de coulée continue.

12. Dispositif selon les revendications 10 ou 11, caractérisé en ce que lesdits moyens (2, 3) assurant la fusion dudit alliage comprennent un creuset (2) contenant le bain métallique en fusion (10) et un inducteur (3).

13. Dispositif selon la revendication 12, caractérisé en ce que ledit creuset (2) est refroidi par des moyens appropriés.

14. Dispositif selon l'une des revendications 10 à 13, caractérisé en ce que lesdits moyens (15, 22, 26, 29) pour recueillir les vapeurs de distillation d'au moins un métal d'apport sont constitués par une structure, refroidie par des moyens appropriés.

15. Dispositif selon la revendication 14, caractérisé en ce que ladite structure refroidie est une plaque (15), un serpentin (22, 26) ou un cylindre creux(29).

16. Dispositif selon l'une des revendications 10 à 15, caractérisé en ce que ladite chambre (1) est reliée à une pompe à vide par l'intermédiaire de moyens de raccordement (12).

17. Dispositif selon l'une des revendications 10 à 16, caractérisé en ce que ladite chambre (1) est refroidie par des moyens appropriés.

18. Dispositif selon la revendication 17, caractérisé en ce que la chambre (1) est à double parois, parcourues par un fluide de refroidissement.

19. Dispositif selon l'une des revendications 10 à 17, caractérisé en ce que ledit dispositif comprend une chambre annexe (18) mise en communication avec ladite chambre (1) par un conduit (25).

20. Dispositif selon la revendication 19 caractérisé en ce que ladite chambre annexe (18) est refroidie par des moyens appropriés.

21. Dispositif selon la revendication 20 caractérisé en ce que ladite chambre annexe (18) est à double parois, parcourues par un fluide de refroidissement.

22. Dispositif selon l'une des revendications 17 à 21, caractérisé en ce que la température du fluide de refroidissement associé à la chambre (1) ou à la chambre annexe (18) est supérieure à celle du fluide de refroidissement associé à par ladite structure refroidie (15, 22, 26, 29).

23. Dispositif selon l'une des revendications 14 à 21, caractérisé en ce que ladite structure refroidie (15, 22) est placée dans ladite chambre (1).

24. Dispositif selon l'une des revendications 19 à 21, caractérisé en ce que ladite structure refroidie (26, 29) est placée dans ladite chambre annexe (18).

25. Dispositif selon l'une des revendications 10 à 24 caractérisé en ce qu'il comprend des moyens (20) pour porter à un potentiel électrique continu négatif ladite structure refroidie (15, 22, 26, 29) par rapport au bain métallique en fusion (10).

26. Dispositif selon la revendication 25, caractérisé en ce que lesdits moyens (20) sont constitués par un générateur (20) de courant continu, la structure refroidie (15, 22, 26, 29) étant isolée des parois de la chambre (1) ou de la chambre annexe (18) et du creuset (2) par une pièce (19).

## Patentansprüche

1. Verfahren zum Trennen der Bestandteile einer Legierung, das für eine ein hochschmelzendes Grundmetall und mindestens ein nicht-hochschmelzendes Zusatzmetall enthaltende Legierung geeignet ist und folgende Stufen umfaßt:
- man sorgt für das Erhitzen der Legierung durch Mittel zum Induktionsschmelzen, wobei jede chemische Einwirkung auf die Legierung vermieden wird, bei mindestens einer Temperatur sowie unter einer kontrollierten Atmosphäre, welche das Sieden mindestens eines Zusatzmetalls ermöglichen,
- man fängt die Dämpfe der Destillation mindestens eines Zusatzmetalls auf, und
- man fängt am Ausgang einer Gießvorrichtung das Material auf, das sich nach der Entfernung mindestens eines Zusatzmetalls aus der Legierung ergibt.

2. Verfahren nach Anspruch 1, dadurch gekennzeichnet, daß die Gießvorrichtung eine Stranggießvorrichtung ist.

3. Verfahren nach einem der Ansprüche 1 oder 2, dadurch gekennzeichnet, daß die Dämpfe der Destillation auf einer gekühlten Struktur aufgefangen werden und daß man das kondensierte Zusatzmetall bzw. die kondensierten Zusatzmetalle von der Struktur abtrennt.

4. Verfahren nach einem der Ansprüche 1 bis 3, dadurch gekennzeichnet, daß die Legierung mindestens zwei Zusatzmetalle enthält, daß die Erhitzungstemperatur der Legierung so gewählt wird, daß alle Zusatzmetalle gleichzeitig sieden, und daß die Destillationdämpfe aller Zusatzmetalle gleichzeitig aufgefangen werden.

5. Verfahren nach Anspruch 4, dadurch gekennzeichnet, daß man die beiden Zusatzmetalle trennt, nachdem sie von der Struktur abgetrennt worden sind.

6. Verfahren nach einem der Ansprüche 1 bis 3, dadurch gekennzeichnet, daß die Legierung mindestens zwei Zusatzmetalle enthält, daß das Erhitzen der Legierung, die ggf. an mindestens einem Zusatzmetall verarmt ist, nacheinander unter einer kontrollierten Atmosphäre und auf verschiedene Temperaturen sichergestellt wird, was das selektive Sieden jedes Zusatzmetalls erlaubt.

7. Verfahren nach Anspruch 6, dadurch gekennzeichnet, daß das Erhitzen derart durchgeführt wird, daß das Sieden der Zusatzmetalle in einer mit den entsprechenden Siedetemperaturen ansteigenden Reihenfolge erfolgt.

8. Verfahren nach Anspruch 6 oder 7, dadurch gekennzeichnet, daß man jedes kondensierte Zusatzmetall nach dem seiner Siedetemperatur entsprechenden Erhitzen und vor dem Erhitzen der an mindestens einem Zusatzmetall verarmten Legierung auf eine das Sieden eines anderen Zusatzmetalls gestattende Temperatur von der Struktur abtrennt.

9. Verfahren nach einem der vorhergehenden Ansprüche, dadurch gekennzeichnet, daß man die gekühlte Struktur auf ein in bezug auf das Metallschmelzbad negatives elektrisches Gleichpotential bringt.

10. Vorrichtung zur Trennung der Bestandteile einer Legierung, insbesondere einer ein hochschmelzendes Grundmetall und mindestens ein nicht-hochschmelzendes Zusatzmetall enthaltenden Legierung, umfassend:
- Mittel (4) zum Zuführen der Legierung,
- Schmelzmittel (2, 3) zur Sicherstellung des Induktionsschmelzens der Legierung, wobei jede chemische Einwirkung auf diese vermieden wird,
- eine Gießvorrichtung zur Aufnahme des kalten Blocks (9),
- Mittel (15, 22, 26, 29) zum Auffangen der Destillationsdämpfe mindestens eines Zusatzmetalls und
- mindestens eine Kammer (1) mit kontrollierter Atmosphäre, wobei mindestens der Inhalt der Mittel (2, 3) zur Sicherstellung des Schmelzens der Legierung gegen die Atmosphäre isoliert ist.

11. Vorrichtung nach Anspruch 10, dadurch gekennzeichnet, daß die Gießvorrichtung eine Stranggießvorrichtung ist.

12. Vorrichtung nach den Ansprüchen 10 oder 11, dadurch gekennzeichnet, daß die Mittel (2, 3) zur Sicherstellung des Schmelzens der Legierung einen das Schmelzmetallbad (10) und einen Induktor (3) enthaltenden Schmelztiegel (2) umfassen.

13. Vorrichtung nach Anspruch 12, dadurch gekennzeichnet, daß der Schmelztiegel (2) durch geeignete Mittel gekühlt ist.

14. Vorrichtung nach einem der Ansprüche 10 bis 13, dadurch gekennzeichnet, daß die Mittel (15, 22, 26, 29) zum Auffangen der Destillationsdämpfe mindestens eines Zusatzmetalls aus einer durch geeignete Mittel gekühlten Struktur gebildet sind.

15. Vorrichtung nach Anspruch 14, dadurch gekennzeichnet, daß die gekühlte Struktur eine Platte (15), eine Schlange (22, 26) oder ein Hohlzylinder (29) ist.

16. Vorrichtung nach einem Ansprüche 10 bis 15, dadurch gekennzeichnet, daß die Kammer (1) mit einer Vakuumpumpe über Anschlußmittel (12) verbunden ist.

17. Vorrichtung nach einem der Ansprüche 10 bis 16, dadurch gekennzeichnet, daß die Kammer (1) durch geeignete Mittel gekühlt ist.

18. Vorrichtung nach Anspruch 17, dadurch gekennzeichnet, daß die Kammer (1) doppelte Wände aufweist, die von einer Kühlflüssigkeit durchströmt werden.

19. Vorrichtung nach einem der Ansprüche 10 bis 17, dadurch gekennzeichnet, daß die Vorrichtung eine Nebenkammer (18) aufweist, die mit der Kammer (1) durch eine Leitung (25) verbunden ist.

20. Vorrichtung nach Anspruch 19, dadurch gekennzeichnet, daß die Nebenkammer (18) durch geeignete Mittel gekühlt ist.

21. Vorrichtung nach Anspruch 20, dadurch gekennzeichnet, daß die Nebenkammer (18) doppelte Wände aufweist, die von einer Kühlflüssigkeit durchströmt werden.

22. Vorrichtung nach einem der Ansprüche 17 bis 21, dadurch gekennzeichnet, daß die Temperatur der Kühlflüssigkeit für die Kammer (1) oder die Nebenkammer (18) höher ist als diejenige der Kühlflüssigkeit für die gekühlte Struktur (15, 22, 26, 29).

23. Vorrichtung nach einem der Ansprüche 14 bis 21, dadurch gekennzeichnet, daß die gekühlte Struktur (15, 22) in der Kammer (1) angeordnet ist.

24. Vorrichtung nach einem der Ansprüche 19 bis 21, dadurch gekennzeichnet, daß die gekühlte Struktur (26, 29) in der Nebenkammer (18) angeordnet ist.

25. Vorrichtung nach einem der Ansprüche 10 bis 24, dadurch gekennzeichnet, daß sie Mittel (20) umfaßt, mit welchen der gekühlten Struktur (15, 22, 26, 29) ein in bezug auf das Metallschmelzbad (10) negatives elektrisches Gleichpotential verliehen wird.

26. Vorrichtung nach Anspruch 25, dadurch gekennzeichnet, daß die Mittel (20) aus einem Gleichstromgenerator (20) bestehen und daß die gekühlte Struktur (15, 22, 26, 29) von den Wänden der Kammer (1) oder der Nebenkammer (18) und des Schmelztiegels (2) durch ein Bauteil (19) isoliert ist.

## Claims

1. A process for separating the constituents of an alloy, especially an alloy comprising a refractory base metal and at least one nonrefractory additive metal, which consists in :
- heating said alloy by induction melting means, while avoiding any chemical action on said alloy, and to at least one temperature and under controlled atmosphere permitting the boiling of at least one additive metal,
- collecting the distillation vapors of at least one additive metal, and
- collecting, at the exit of casting means, the substance resulting from the removal of at least one additive metal from the alloy.

2. The process as claimed in claim 1, wherein the casting means are continuous casting means.

3. The process as claimed in either of claims 1 or 2, wherein the distillation vapors being collected on a cooled structure, said condensed additive metal (metals) is (are) separated from said structure.

4. The process as claimed in either of claims 1 to 3, wherein said alloy comprising at least two additive metals, the temperature of heating of said alloy is chosen so as to permit the simultaneous boiling of all the additive metals, the distillation vapors of all the additive metals being then collected simultaneously.

5. The process as claimed in claim 4, wherein said two additive metals are separated after they have been separated from said structure.

6. The process as claimed in either of claims 1 to 3, wherein said alloy comprising at least two additive metals, the heating of said alloy, possibly depleted in at least one additive metal, is effected successively under controlled atmosphere and at different températures, permitting the selective boiling of each additive metal.

7. The process as claimed in claim 6, wherein the heating is carried out so as to obtain the boiling of the additive metals in an increasing order of the corresponding boiling temperatures.

8. The process as claimed in claim 6 or 7, wherein each condensed additive metal is separated from said structure after the heating corresponding to its boiling temperature and before proceeding with the heating of the alloy, depleted in at least one additive metal, to a temperature permitting the boiling of another additive metal.

9. The process as claimed in one of the preceding claims, wherein said cooled structure is taken to a direct electrical potential which is negative relative to the molten metal bath.

10. A device for separating the constituents of an alloy, especially an alloy comprising a refractory base metal and at least one nonrefractory additive metal, which comprises:
- means (4) for feeding an alloy,
- induction melting means (2, 3) ensuring the melting of said alloy while avoiding any chemical action on the latter,
- casting means (5), for collecting the cold ingot (9),
- means (15, 22, 26, 29) for collecting the distillation vapors of at least one additive metal, and
- at least one chamber (1) with a controlled atmosphere isolating from the atmosphere at least the content of said means (2, 3) ensuring the melting of said alloy.

11. The device as claimed in claim 10, wherein the casting means are continuous casting means.

12. The device as claimed in claims 10 or 11, wherein said means (2, 3) ensuring the melting of said alloy comprise a crucible (2) containing the molten metal bath (10) and an inductor (3).

13. The device as claimed in claim 12, wherein said crucible (2) is cooled by suitable means.

14. The device as claimed in one of claims 10 to 13, wherein said means (15, 22, 26, 29) for collecting the distillation vapors of at least one additive metal consist of a structure cooled by suitable means.

15. The device as claimed in claim 14, wherein said cooled structure is a plate (15), a coil (22, 26) or a hollow cylinder (29).

16. The device as claimed in one of claims 10 to 15, wherein said chamber (1) is connected to a vacuum pump by means of connecting means (12).

17. The device as claimed in one of claims 10 to 16, wherein said chamber (1) is cooled by suitable means.

18. The device as claimed in claim 17, wherein the chamber (1) has double walls carrying a coolant fluid.

19. The device as claimed in one of claims 10 to 17, wherein said device comprises an annex chamber (18) placed in communication with said chamber (1) via a conduit (25).

20. The device as claimed in claim 19, wherein said annex chamber (18) is cooled by suitable means.

21. The device as claimed in claim 20, wherein said annexe chamber (18) has double walls carrying a coolant fluid.

22. The device as claimed in one of claims 17 to 21, wherein the temperature of the coolant fluid associated with the chamber (1) or with the annex chamber (18) is higher than that of the coolant fluid associated with said cooled structure (15, 22, 26, 29).

23. The device as claimed in one of claims 14 to 21, wherein said cooled structure (15, 22) is placed in said chamber (1).

24. The device as claimed in one of claims 19 to 21, wherein said cooled structure (26, 29) is placed in said annex chamber (18).

25. The device as claimed in one of claims 10 to 24, which comprises means (20) for taking said cooled structure (15, 22, 26, 29) to a direct electrical potential which is negative relative to the molten metal bath (10).

26. The device as claimed in claim 23, wherein said means (20) consist of a direct current generator (20), the cooled structure (15, 22, 26, 29) being insulated from the walls of the chamber (1) or of the annex chamber (18) and from the crucible (2) by a component (19).
